# EUROPÄISCHE PATENTSCHRIFT

(11) **EP 3 928 082 B1**
(45) Veröffentlichungstag und Bekanntmachung des Hinweises auf die Patenterteilung: **02.08.2023**
(21) Anmeldenummer: 20713172.3
(22) Anmeldetag: 21.02.2020
(51) Int. Cl.: G01N 21/65

(54) **VERFAHREN UND VORRICHTUNG ZUM IDENTIFIZIEREN VON FLÜCHTIGEN SUBSTANZEN MIT RESONATORVERSTÄRKTER RAMAN-SPEKTROSKOPIE BEI REDUZIERTEM DRUCK**
METHOD AND APPARATUS FOR IDENTIFYING VOLATILE SUBSTANCES USING RESONATOR-AMPLIFIED RAMAN SPECTROSCOPY UNDER REDUCED PRESSURE
PROCÉDÉ ET DISPOSITIF D'IDENTIFICATION DE SUBSTANCES VOLATILES PAR SPECTROSCOPIE RAMAN AMPLIFIÉE PAR RÉSONATEUR À PRESSION RÉDUITE

(30) Priorität: 21.02.2019 DE 102019104481
(43) Veröffentlichungstag der Anmeldung: 29.12.2021
(73) Patentinhaber: Institut für Nanophotonik Göttingen e.V., 37077 Göttingen (DE)
(72) Erfinder: CTISTIS, Georgios, 34131 Kassel (DE); LENTH, Christoph, 37075 Göttingen (DE); WACKERBARTH, Hainer, 34131 Kassel (DE)
(74) Vertreter: REHBERG HÜPPE + PARTNER
(86) Internationale Anmeldenummer: PCT/EP2020/054635
(87) Internationale Veröffentlichungsnummer: WO 2020/169808

(56) Entgegenhaltungen:
- CN-A- 106 053 428
- US-A- 6 072 577
- US-B1- 7 385 692
- SMITH L M ET AL: "RAMAN SPECTROSCOPY FOR ON-LINE MULTIPLE COMPONENT GAS ANALYSIS", TECHNICAL PAPER OF ISA, INSTRUMENT SOCIETY OF AMERICA, Bd. 45, Nr. PART 02, 1. Januar 1990 (1990-01-01), Seiten 711-720, XP000172030, ISSN: 1054-0032

## Beschreibung

### TECHNISCHES GEBIET DER ERFINDUNG

Die Erfindung bezieht sich auf ein Verfahren zum Identifizieren von Substanzen. Insbesondere bezieht sich die Erfindung auf ein Verfahren mit den Schritten Durchleiten der zu identifizierenden Substanzen in einer Gasphase durch eine Gaszelle, Einstrahlen von Licht in die Gaszelle und Analysieren einer spektralen Zusammensetzung von lateral zu dem eingestrahlten Licht aus der Gaszelle gestreutem Licht. Weiterhin bezieht sich die Erfindung auf eine Vorrichtung zum Identifizieren von Substanzen und insbesondere auf eine Vorrichtung mit einer Gaszelle, die zur Aufnahme der zu identifizierenden Substanzen in einer Gasphase ausgebildet ist, einer Lichtquelle, die zum Einstrahlen von Licht in die Gaszelle ausgebildet ist, einem Spektrometer, das zum Analysieren einer spektralen Zusammensetzung von aus der Gaszelle gestreutem Licht ausgebildet und angeordnet ist, und einer Pumpeinrichtung, die zum Einstellen eines Drucks in der Gaszelle ausgebildet ist.

Die vorliegende Erfindung fällt auf das Gebiet der Gasanalytik. Bei der Analyse der spektralen Zusammensetzung des aus der Gaszelle gestreuten Lichts kann es insbesondere um die Detektion von Linien von aus der Gaszelle gestreute Raman-Strahlung gehen, deren Wellenlängen für die streuenden Substanzen charakteristisch sind.

### STAND DER TECHNIK

Aus der WO 2017/ 125 214 A1 sind ein Verfahren und eine Vorrichtung zum Vorbereiten einer Analyse von in einem Fluid gelöstem Gas und ein Analysesystem zur Analyse dieses Gases bekannt. Die Vorrichtung zum Vorbereiten der Analyse umfasst eine Pumpe mit einem Gehäuse zum Fördern des Fluids. Im Inneren des Gehäuses ist ein Probenraum zum Entgasen des Fluids ausgebildet ist, um das in dem Fluid gelöste Gas in dem Probenraum zu extrahieren. Die Vorrichtung umfasst weiterhin einen Reaktor, um eine physikalische Wechselwirkung mit dem extrahierten Gas herbeizuführen. Insbesondere ist der Reaktor dazu eingerichtet, eine Raman-Streuung einfallender Laserstrahlung in Abhängigkeit von dem extrahierten Gas herbeizuführen. Der Reaktor umfasst eine optische Multi-Pass-Zelle, in der die Laserstrahlung hin und her läuft, bis sie aus dem Reaktor heraus gestreut wird. Die Pumpe vergrößert zum Entgasen des Fluids den Raum innerhalb des Probenraums so, dass ein definierter Unterdruck entsteht. Zur Auswertung der Raman-Emission aus dem Reaktor dahingehend, welche Bestandteile das aus dem Fluid extrahierte Gas aufweist, kann ein Vergleich des Spektrums der gestreuten Laserstrahlung mit einer Anzahl von Referenzspektren bekannter Gase erfolgen. Nach der erfolgten Analyse werden der Reaktor und der Probenraum zu einem Fluidauslass hin evakuiert. Dazu wird zunächst eine Fluidverbindung zwischen der Umgebung der Vorrichtung und dem Reaktor hergestellt und dann der gesamte Rauminhalt des Reaktors in den Probenraum entleert, bevor der Rauminhalt des Probenraums über einen Fluidauslass abgeführt wird. Bei dieser Vorgehensweise besteht die Gefahr, dass sich aus dem Fluid extrahierte Substanzen an den Wänden des Reaktors anlagern und hieraus beim Spülen des Reaktors mit der Luft aus der Umgebung nicht wieder entfernt werden. Sie werden so in nachfolgende Messungen verschleppt und verfälschen diese.

Die US 2004/ 0 042 006 A1 offenbart ein multiplexendes kohärentes Raman-Spektrometer und ein spektroskopisches Verfahren zum Detektieren und Identifizieren einzelner Komponenten einer chemischen Mischung, die mit einem Gaschromatographen in einzelne Gase getrennt werden. Die Gase werden nacheinander durch eine geheizte fensterlose Gaszelle geleitet, in die Licht eingestrahlt wird. Von den Gasen aus der Gaszelle heraus gestreute Raman-Strahlung wird gefiltert und einem Monochromator mit Mehrkanaldetektion zugeführt. Das in die Gaszelle eingestrahlte Licht ist Laserlicht, das zu einem Teil zuvor durch eine weitere Gaszelle hindurchgeführt wird. In dieser weiteren Gaszelle wird das Laserlicht an einem unter Überdruck stehendem weiteren Gas bekannter Zusammensetzung gestreut, um einen breitbandigen kohärenten Strahl mit einer Bandbreite von mehr als 3.000 Wellenzahlen bereitzustellen.

Aus der CN 106 053 428 A ist eine optische Messvorrichtung zum online-Messen des Gasgehalts in einer Gasleitung bekannt. Die Messvorrichtung weist eine Raman-Strahlungsverstärkungseinrichtung mit einem Fabry-Pörot-Resonator auf. Zu dessen Ausbildung sind Reflektoren an zwei Enden einer Probenzelle angeordnet, die weiterhin einen Gaseinlass und einen Gasauslass sowie ein Fenster für die Raman-Strahlung aufweist. Jeder der Reflektoren weist eine sphärische Oberfläche auf, in deren Zentrum eine kreisförmige ebene Fläche angeordnet ist. Dadurch wird ein doppelter Fabry-Pérot-Resonator ausgebildet, jeweils zwischen der sphärischen Oberfläche des einen und der ebenen Fläche des anderen Reflektors. Der Fabry-Pörot-Resonator verstärkt Laserlicht, das durch ein Fenster in dem einen der beiden Reflektoren eingestrahlt wird. Durch das verstärkte Laserlicht ist auch die Raman-Strahlung, die durch das Fenster an der Seite der Probenzelle ausgekoppelt wird, um mehrere Größenordnungen verstärkt.

Aus der CN 106 248 651 A ist eine Raman-Spektrum-Verstärkungsvorrichtung mit einem piezoelektrisch geregelten Resonator bekannt. Eine Laserdiode ist über eine Fokussiereinrichtung und ein Spektrometer ist über eine Lichtführungseinrichtung an den Resonator angeschlossen. Durch die piezoelektrische Regelung des Resonators wird eine bis zu 10.000-fache Verstärkung des Raman-Spektrums erzielt.

Die WO 2018/ 009 953 A1 offenbart eine Vorrichtung für photothermische Interferometrie zum Detektieren eines Moleküls in einer Probe, insbesondere zum Detektieren eines Spurengases. Die Vorrichtung umfasst ein Fabry-Perot-Interferometer mit einer Kavität zur Aufnahme der Probe zwischen zwei Spiegeln. Die Kavität ist Teil einer Gaszelle. Ein Messlaserstrahl wird über einen der beiden Spiegel in die Kavität zwischen den Spiegeln eingekoppelt, und die Intensität des durch den anderen Spiegel aus der Kavität wieder austretenden Messlaserlichts wird mit einem Photodetektor gemessen. Diese Intensität ändert sich bei Änderung des Brechungsindex der Probe zwischen den Spiegeln, weil der Brechungsindex der Probe optische Länge der Kavität bestimmt und damit die Abstimmung der Kavität auf die Wellenlänge des Messlaserstrahls beeinflusst. Die Änderung des Brechungsindex der Probe ist abhängig davon, wie stark die Probe einen Anregungslaserstrahl absorbiert, der seitlich in die Kavität des Fabry-Perot-Interferometers eingestrahlt wird. Bei der bekannten Vorrichtung kann die Wellenlänge des Anregungslaserstrahls variiert werden. Um Absorptionslinien der Probe in Bezug auf die Wellenlänge des Anregungslaserstrahls schmal zu halten, wird der Druck innerhalb der Gaszelle auf 200 mbar abgesenkt.

Die US 2018/ 0 052 047 A1 offenbart eine Vorrichtung zur Kohlenstoffisotopenanalyse mit einer Gaszelle innerhalb eines verstimmbaren Resonators zwischen zwei Resonatorspiegeln. Ein Laserstrahl variabler Wellenlänge wird über den einen Resonatorspiegel eingekoppelt, und die Intensität von über den anderen Resonatorspiegel wieder aus dem Resonator austretendem Laserlicht wird mit einem Photodetektor erfasst wird. Dabei können auch mehrere Photodetektoren für unterschiedliche Frequenzanteile des eingekoppelten Laserlichts vorhanden sein. Die bekannte Vorrichtung umfasst somit ein Fabry-Perot-Interferometer, bei dem die Transmission durch den Resonator zusätzlich zu der Abstimmung der Länge des Resonators auf die Wellenlänge des eingekoppelten Laserlichts von der Absorption des eingekoppelten Laserlichts durch das Gas in der Gaszelle bestimmt wird. Diese Absorption wird durch das wiederholte Hin- und Herlaufen des Laserlichts in dem Resonator verstärkt.

Aus Smith L. M. et al.: "Raman Spectroscopy for On-Line Multiple Component Gas Analysis", Technical Paper of ISA, Instrument Society ofAmerica, Bd. 45, Nr. PART 02, 01.01.1990, Seiten 711-720, ist ein Verfahren zur Gasanalyse mittels Raman-Spektroskopie bekannt. Dabei wird eine Gaszelle in einen Laserresonator eines Lasers angeordnet, der das in die Gaszelle eingestrahlte Licht bereitstellt. Seitlich durch Raman-Streuung aus der Gaszelle und dem Laserresonator gestreutes Licht wird analysiert. Es wird vorgeschlagen, die Gaszelle auf 200 bis 300 °C zu beheizen, um Messungen an schwer flüchtigen Substanzen zu ermöglichen und Kontaminationen der Gaszelle zu vermeiden.

Aus der US 7 385 692 B1 sind ein Verfahren und ein System zur faseroptischen Bestimmung von Gaskonzentrationen in Flüssigkeitsbehältern bekannt. An einer Sensorspitze ist hinter einer gaspermeablen Membran eine Gaszelle ausgebildet, wobei über koaxial angeordnete Lichtleiter einerseits Licht in die Gaszelle eingestrahlt und andererseits Raman-gestreutes Licht aus der Gaszelle zu einem Raman-Spektrometer geleitet wird.

Aus der US 6 072 577 A ist ein Verfahren zum Bestimmen einer Zusammensetzung einer Gasmischung bekannt, die ein oder mehrere Edelgase aufweist. Ein Raman-Spektrum der Gasmischung wird gemessen, und aus dem Raman-Spektrum werden Mengen von Raman-aktiven Gasen in der Gasmischung bestimmt. Die Menge der nicht Raman-aktiven Edelgase, die den Rest der Gasmischung ausmachen, werden dann aus den Mengen der Raman-aktiven Gase bestimmt.

### AUFGABE DER ERFINDUNG

Es ist die Aufgabe der Erfindung, ein Verfahren und eine Vorrichtung zum Identifizieren von Substanzen aufzuzeigen, bei denen die Gefahr des Verschleppens der zu identifizierenden Substanzen in nachfolgende Messungen minimiert ist.

### LÖSUNG

Die Aufgabe der Erfindung wird durch ein Verfahren mit den Merkmalen des unabhängigen Patentanspruchs 1 und eine Vorrichtung mit den Merkmalen des unabhängigen Patentanspruchs 9 gelöst. In den abhängigen Patentansprüchen sind bevorzugte Ausführungsformen des erfindungsgemäßen Verfahrens und der erfindungsgemäßen Vorrichtung definiert.

### BESCHREIBUNG DER ERFINDUNG

Bei einem erfindungsgemäßen Verfahren zum Identifizieren von Substanzen, bei dem die zu identifizierenden Substanzen in einer Gasphase durch eine Gaszelle hindurchgeleitet werden, bei dem Licht in die Gaszelle eingestrahlt wird und bei dem eine spektrale Zusammensetzung von lateral zu dem eingestrahlten Licht aus der Gaszelle gestreutem Licht analysiert wird, wird ein Partialdruck der zu identifizierenden Substanzen in der Gaszelle auf weniger als 5 × 10⁴ Pa gehalten und wird die Gaszelle in einem Resonator angeordnet, der auf mindestens eine Wellenlänge des eingestrahlten Lichts oder des gestreuten Lichts abgestimmt wird. Das spektral analysierte gestreute Licht ist ein Anteil des in die Gaszelle eingestrahlten Licht, der lateral zu dem eingestreuten Licht aus der Gaszelle gestreut wird. Der bei dem spektral analysierten gestreuten Licht der lateralen Streuung des eingestrahlten Lichts zugrunde liegende Prozess kann insbesondere Raman-Streuung sein.

Mit dem geringen Partialdruck der zu identifizierenden Substanz in der Gaszelle, der in dem Bereich von weniger als 5 × 10⁴ Pa liegt, wird die Gefahr des Verschleppens der Substanz in nachfolgende Messungen minimiert, weil dadurch nicht nur die absolute Menge der zu identifizierenden Substanzen in der Gaszelle klein gehalten wird, sondern auch die Neigung der zu identifizierenden Substanzen, an den Wänden der Gaszelle zu kondensieren, minimiert wird, da der Taupunkt der zu identifizierenden Substanzen mit ihrem Partialdruck absinkt. Mit dem Partialdruck von weniger als 5 × 10⁴ Pa werden auch Substanzen, die nur schwer flüchtig sind, sicher in der Gasphase gehalten und können so leicht aus der Gaszelle heraus gespült werden. Der geringe Partialdruck der zu identifizierenden Substanzen in der Gaszelle hat aber auch zur Folge, dass die Intensität des von den zu identifizierenden Substanzen gestreuten Lichts, insbesondere die Intensität von Raman-Strahlung, die von den zu identifizierenden Substanzen ausgeht, reduziert ist. Um die Intensität des gestreuten Lichts dennoch auf ein gut erfassbares Niveau zu bringen, wird die Gaszelle erfindungsgemäß in dem Resonator angeordnet, der auf eine Wellenlänge des eingestrahlten Lichts oder des gestreuten Lichts abgestimmt wird, um so indirekt über die Intensität des anregenden Lichts oder direkt die Intensität des gestreuten Lichts zu erhöhen. Dabei kann die Abstimmung des Resonators schnell nacheinander auf unterschiedliche Wellenlängen des eingestrahlten Lichts und/oder des gestreuten Lichts erfolgen. Auch ein Durchfahren der möglichen Wellenlängen unter paralleler Analyse der spektralen Zusammensetzung des aus der Gaszelle gestreuten Lichts ist möglich. Durch die Anordnung der Gaszelle in dem Resonator und das Abstimmen des Resonators zur Verstärkung des aus der Gaszelle gestreuten Lichts werden bei dem erfindungsgemäßen Verfahren ausreichende Intensitäten des gestreuten Lichts mit für die zu identifizierenden Substanzen charakteristischen Wellenlängen erhalten.

Wenn der Partialdruck der zu identifizierenden Substanzen in der Gaszelle auf weniger als 3 × 10⁴ Pa und insbesondere auf einem Wert zwischen 2 × 10⁴ Pa und 0,2 × 10⁴ Pa gehalten wird, wird die Gefahr der Kondensation der zu identifizierenden Substanzen an den Wänden der Gaszelle und damit ihr Verschleppen in nachfolgende Messungen auch dann minimiert, wenn die zu identifizierenden Substanzen schwer flüchtig sind und entsprechend stark zur Kondensation neigen.

Bevorzugt ist es bei dem erfindungsgemäßen Verfahren, wenn nicht nur der Partialdruck der zu identifizierenden Substanzen, sondern auch ein absoluter Druck in der Gaszelle auf weniger als 5 × 10⁴ Pa, vorzugsweise auf weniger als 3 × 10⁴ Pa und am meisten bevorzugt auf einen Wert zwischen 2 × 10⁴ Pa und 0,2 × 10⁴ Pa gehalten wird. Idealerweise befinden sich in der Gaszelle ausschließlich die zu identifizierenden Substanzen, so dass das aus der Gaszelle gestreute Licht allein diesen zu identifizierenden Substanzen zuzuordnen ist. Wenn sich in der Gaszelle neben den zu identifizierenden Substanzen noch ein weiteres Gas befindet, beispielsweise ein Trägergas, in dem die zu identifizierenden Substanzen durch die Gaszelle hindurch geleitet werden, handelt es sich hierbei vorzugsweise um ein inertes Gas, das nicht mit den zu identifizierenden Substanzen reagiert und das das in die Gaszelle eingestrahlte Licht mit anderen Wellenlängen reflektiert als die zu identifizierenden Substanzen, so dass eine einfache spektrale Trennung der Lichtanteile von dem Trägergas und den zu identifizierenden Substanzen möglich ist. Dies gilt insbesondere dann, wenn der absolute Druck in der Gaszelle um ein Vielfaches höher als der Partialdruck der zu identifizierenden Substanzen in der Gaszelle ist.

Wenn das eingestrahlte Licht in den Resonator eingekoppelt wird, der Resonator also in Richtung des eingestrahlten Lichts ausgerichtet ist, wobei das spektral analysierte gestreute Licht lateral aus dem Resonator austritt, durchläuft das eingestrahlte Licht die Gaszelle auch dann viele Male, falls der Resonator nicht auf die Wellenlänge des eingestrahlten Lichts, sondern auf eine Wellenlänge des gestreuten Lichts abgestimmt ist, so dass auch dann die Wahrscheinlichkeit einer Wechselwirkung des eingestrahlten Lichts mit der zu identifizierenden Substanz in vorteilhafter Weise stark erhöht ist.

Vorzugsweise wird bei dem erfindungsgemäßen Verfahren der Resonator automatisch auf die Wellenlänge des eingestrahlten Lichts abgestimmt, wozu die Intensität des eingestrahlten Lichts in dem Resonator erfasst und maximiert werden kann. Alternativ kann, wie bereits angedeutet wurde, der Resonator bezüglich der Wellenlängen des gestreuten Lichts durchgestimmt werden, um die unterschiedlichen Wellenlängenanteile des gestreuten Lichts nacheinander zu verstärken. Im Falle der Verwendung eines Trägergases können beim Abstimmen des Resonators auf das gestreute Licht neben der Wellenlänge des eingestrahlten Lichts auch Wellenlängen, von denen bekannt ist, dass bei ihnen das Trägergas streut, gezielt ausgelassen werden.

Als zusätzliche Maßnahme, um ein Kondensieren der zu identifizierenden Substanzen an den Wänden der Gaszelle und damit ein Verschleppen der zu identifizierenden Substanzen in nachfolgende Messungen zu verhindern, kann eine Temperatur von Innenoberflächen der Gaszelle auf einem gegenüber Raumtemperatur erhöhten Wert von beispielsweise zwischen 60 °C und 180 °C und vorzugsweise zwischen 90 °C und 140 °C gehalten werden. Diese gemäßigten erhöhten Temperaturen kollidieren in der Regel weder mit der Abstimmung des Resonators auf eine bestimmte Wellenlänge noch mit dem Halten des Partialdrucks der zu identifizierenden Substanzen oder des absoluten Drucks in der Gaszelle auf den Wert von weniger als 5 × 10⁴ Pa.

Das Identifizieren der jeweiligen Substanzen in der Gaszelle anhand des Spektrums des von ihnen gestreuten Lichts wird durch vereinfacht, dass jeweils nur wenige Substanzen und im Idealfall jeweils nur eine einzige Substanz zu einem bestimmten Zeitpunkt in der Gaszelle enthalten ist, gegebenenfalls neben dem Trägergas. Um dies zu erreichen, werden die zu identifizierenden Substanzen durch einen Gaschromatographen in die Gaszelle eingeleitet, durch den sie in einem Trägergas gelöst unterschiedlich schnell hindurchtreten und entsprechend zu unterschiedlichen Zeitpunkten in die Gaszelle gelangen.

Da das erfindungsgemäße Verfahren auch für schwer flüchtige Substanzen geeignet ist, können die zu identifizierenden Substanzen zunächst durch Reduzieren des absoluten Drucks und/oder Erhöhen ihrer Temperatur in die Gasphase überführt werden, in der sie dann durch die Gaszelle hindurchgeleitet werden. Da die zu identifizierenden Substanzen durch den Gaschromatographen in die Gaszelle eingeleitet werden, können die zu identifizierenden Substanzen in dem Gaschromatographen in die Gasphase überführt und dann durch Evakuieren am Auslass der Gaszelle und die resultierende Druckdifferenz durch die Gaszelle hindurchgeleitet werden.

Aus der Gaszelle können die zu identifizierenden Substanzen in ein Massenspektrometer überführt werden, um neben dem von ihnen gestreuten Licht zusätzliche Informationen zu den zu identifizierenden Substanzen zu erhalten. Spätestens damit steht eine ausreichend große Informationsbasis zur Verfügung, um selbst solche Substanzen eindeutig analysieren zu können, die überlappende Spektren des von ihnen gestreuten Lichts aufweisen.

Eine erfindungsgemäße Vorrichtung zum Identifizieren von Substanzen mit einer Gaszelle, die zur Aufnahme der zu identifizierenden Substanzen in einer Gasphase ausgebildet ist, einer Lichtquelle, die zum Einstrahlen von Licht in die Gaszelle ausgebildet und angeordnet ist, einem Spektrometer, das zum Analysieren einer spektralen Zusammensetzung von lateral zu dem eingestrahlten Licht aus der Gaszelle gestreutem Licht ausgebildet und angeordnet ist, und einer Pumpeinrichtung, die zum Einstellen eines Drucks in der Gaszelle ausgebildet ist, ist die Pumpeinrichtung zum Halten eines Partialdrucks der zu identifizierenden Substanzen in der Gaszelle von weniger als 5 × 10⁴ Pa ausgebildet und angeschlossen und umschließt ein Resonator die Gaszelle, der auf mindestens eine Wellenlänge des eingestrahlten Lichts oder des gestreuten Lichts abstimmbar ist.

Das Spektrometer kann insbesondere ein Raman-Spektrometer sein, also speziell auf eine spektrale Analyse von Raman-gestreutem Licht abgestimmt sein. Dies bedeutet, dass das Spektrometer speziell zur Auflösung von gegenüber dem eingestrahlten Licht Raman-verschobenen Wellenlängen des gestreuten Lichts ausgebildet ist.

Die Lichtquelle kann insbesondere dazu angeordnet ist, das eingestrahlte Licht in den Resonator einzukoppeln, wobei das Spektrometer dann dazu angeordnet ist, die spektrale Zusammensetzung des lateral aus dem Resonator austretenden gestreutem Lichts zu analysieren.

Eine zusätzliche Abstimmeinrichtung der erfindungsgemäßen Vorrichtung kann zum automatischen Abstimmen des Resonators auf die Wellenlänge des eingestrahlten Lichts oder zum Durchstimmen des Resonators bezüglich der Wellenlänge des gestreuten Lichts ausgebildet sein. Die Abstimmeinrichtung kann insbesondere einen den Resonator begrenzenden Reflektor abhängig von einer gemessenen Intensität des eingestrahlten Lichts in dem Resonator verlagern oder kontinuierlich oder periodisch verschieben.

Zusätzliche Heizeinrichtungen der erfindungsgemäßen Vorrichtung können zum Halten einer Temperatur von Innenoberflächen der Gaszelle auf einen Wert zwischen 60 °C und 180 °C ausgebildet sein.

Zum Hindurchleiten der zu identifizierenden Substanzen in einem Trägergas durch die Gaszelle können ein Gasreservoir und Gasführungseinrichtungen der Vorrichtung ausgebildet und angeschlossen sein.

Ein Gaschromatograph der Vorrichtung ist gasstromauf an die Gaszelle angeschlossen sein, und dieser Gaschromatograph kann mindestens ein Kapillarrohr aufweisen, durch das die zu identifizierenden Substanzen in dem Trägergas geführt werden. Konkret kann der Gaschromatograph einen thermischen Verdampfer aufweisen, der die Substanzen in die Gasphase bringt und unter einem Überdruck steht. Dieser Überdruck kann nicht nur gegenüber der Gaszelle sondern auch absolut, d. h. gegenüber Normaldruck gegeben sein. Durch die aus dem Überdruck resultierende Druckdifferenz geht die Gasphase in eine chromatographische Säule des Gaschromatographen über, die ebenfalls beheizt werden kann, um Kondensationen zu vermeiden. Nach der Säule kann das Gas in das als Transferkapillare dienende beheizte Kapillarrohr eintreten, das an die Gaszelle angeschlossen ist. Die Gaszelle wird evakuiert und ebenfalls beheizt. Damit wird sichergestellt, dass keine Kondensation in der Gaszelle efolgt und dass die aus der chromatoraphischen Säule des Gaschromatographen austretenden Volumina der Substanzen ausreichend sind, um sie zu identifizieren.

Gegebenenfalls als Teil des Gaschromatographen kann eine Verdampfungseinrichtung zum Überführen der zu identifizierenden Substanzen in die Gasphase durch Reduzieren des Umgebungsdrucks und/oder Erhöhen ihrer Temperatur angeordnet sein.

Gasstromab kann an die Gaszelle ein Massenspektrometer der Vorrichtung angeschlossen sein. Soweit ein Trägergas zum Einsatz kommt, versteht es sich, dass dieses Trägergas auch in dem Massenspektrometer ein möglichst gut von den zu identifizierenden Substanzen abtrennbares Signal liefert, ebenso wie in dem Spektrometer zum Analysieren der spektralen Zusammensetzung des aus der Gaszelle gestreuten Lichts.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Resonator die Rede ist, ist dies so zu verstehen, dass genau ein Resonator, zwei Resonatoren oder mehr Resonatoren vorhanden sind. Die in den Patentansprüchen explizit angeführten Merkmale können durch weitere Merkmale ergänzt werden oder die einzigen Merkmale sein, die das jeweilige Verfahren bzw. die jeweilige Vorrichtung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erfindungsgemäße Vorrichtung zur Durchführung des erfindungsgemäßen Verfahrens in einer ersten Ausführungsform und
- **Fig. 2**: zeigt, eine Pumpeinrichtung, Gasführungseinrichtungen und weitere Bestandteile einer weiteren Ausführungsform der erfindungsgemäßen Vorrichtung.

### FIGURENBESCHREIBUNG

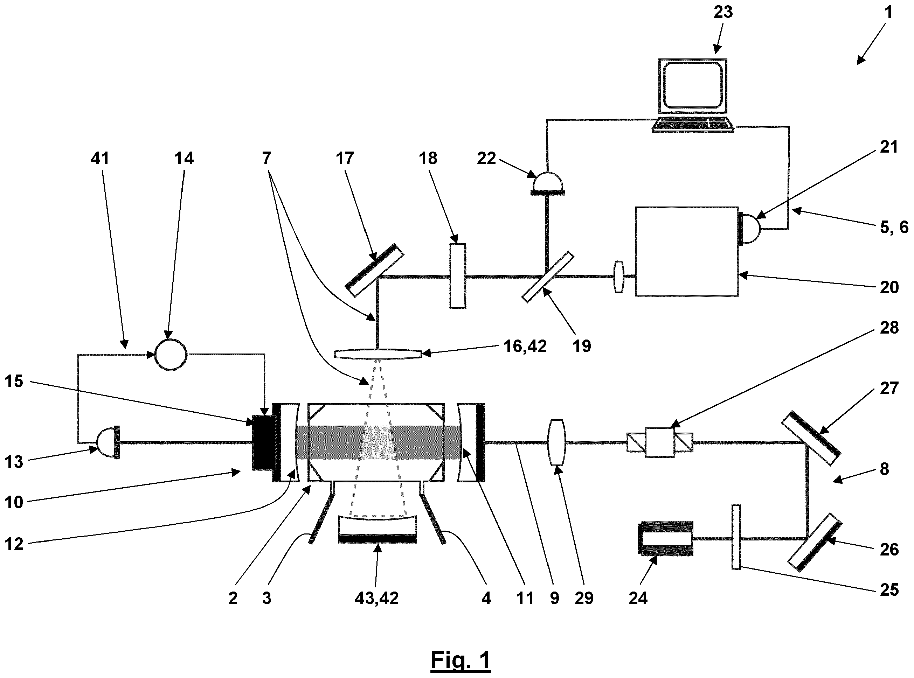

Die in **Fig. 1** dargestellte Vorrichtung 1 zum Identifizieren von Substanzen weist als zentrales Element eine Gaszelle 2 auf, die zur Aufnahme der zu identifizierenden Substanzen in einer Gasphase ausgebildet ist. Die Gaszelle 2 weist dazu einen Gaszulauf 3 und einen Gasablauf 4 auf. Ein Spektrometer 5, das insbesondere als Raman-Spektrometer 6 ausgebildet ist, dient zum Analysieren einer spektralen Zusammensetzung von aus der Gaszelle 2 gestreutem Licht 7, d. h. insbesondere von sogenannter Raman-Strahlung. Das gestreute Licht 7 wird mit Hilfe einer Lichtquelle 8 hervorgerufen, die Licht 9 in die Gaszelle 2 einstrahlt. Um zu identifizierende Substanzen in der Gaszelle 2 aufgrund des von ihnen gestreuten Lichts 7 auch dann identifizieren zu können, wenn ein Partialdruck dieser Substanzen in der Gaszelle 2 nur sehr gering ist, ist die Gaszelle 2 in einem Resonator 10 angeordnet. Der Resonator 10 ist hier zwischen einem Einkoppelspiegel 11, über den das Licht 9 von der Lichtquelle 8 eingekoppelt wird, und einem Auskoppelspiegel 12 ausgebildet. Mit einer Abstimmeinrichtung 41 ist der Resonator 10 abstimmbar. Dazu ist hinter dem Auskoppelspielgel 12 ein Lichtsensor 13 der Abstimmeinrichtung 41 angeordnet, und abhängig von einem Signal des Lichtsensors 13 wird von einer Regelung 14 ein Piezoelement 15 angesteuert, mit dem der Auskoppelspiegel 12 in Richtung seines Abstands zu dem Einkoppelspiegel 11 verlagerbar ist. Konkret kann der Resonator 10 so abgestimmt werden, dass die Intensität des Lichts 9 in dem Resonator 10 maximiert wird. Hierdurch wird auch die Intensität des aus der Gaszelle 2 heraus gestreuten Lichts 7 maximiert.

Das Spektrometer 5 zur Erfassung und spektralen Analyse des gestreuten Lichts 7 umfasst eine Sammeloptik 42 mit einem Hohlspiegel 43 und einer Sammellinse 16, einen Umlenkspiegel 17, eine Polarisationseinheit 18, um das Licht 7 polarisationsabhängig messen zu können, ein Notch-Filter 19, um Anteile des Lichts 7 mit der Wellenlänge des eingestrahlten Lichts 9 auszublenden, eine Dispersionseinrichtung 20, um das Licht 7 wellenlängenabhängig abzulenken, und eine CCD-Kamera 21, um das Licht 7 wellenlängenabhängig zu registrieren. Von dem Notch-Filter 19 ausgeblendetes Licht wird mit einem Lichtsensor 22 erfasst, der ebenso wie die CCD-Kamera 21 an eine Auswerteeinrichtung 23 angeschlossen ist.

Die Lichtquelle 8 weist einen Laser 24, einen Laserlinienfilter 25, Umlenkspiegel 26 und 27 sowie eine optische Diode 28 auf. Zwischen der Lichtquelle 8 und dem die Gaszelle 2 umschließenden Resonator 10 ist eine Fokussieroptik 29 angeordnet.

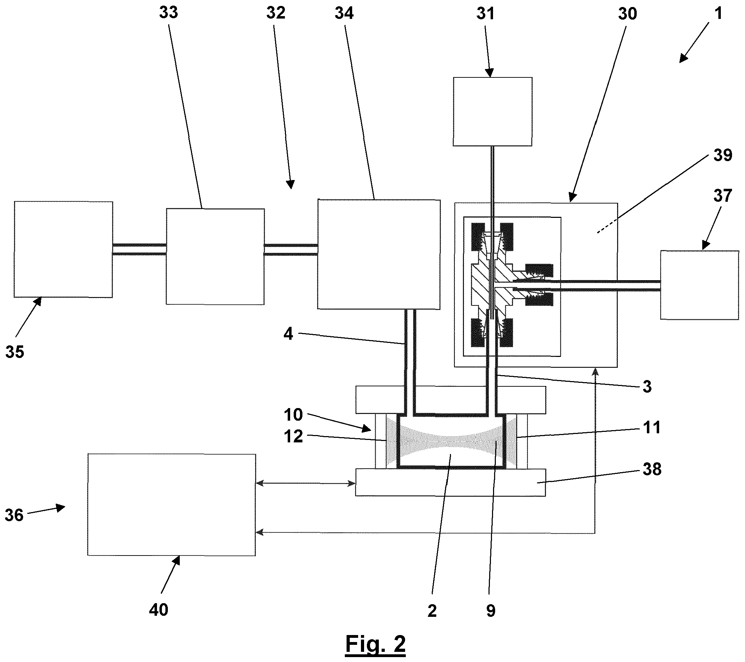

**Fig. 2** zeigt, dass die Gaszelle 2 zwischen den Resonatorspiegeln 11 und 12 des Resonators 10 über ihren Gaszulauf 3 an einen Gaschromatographen 30 angeschlossen ist. Aus einem Gasreservoir 31 werden dem Gaschromatographen 30 die zu analysierenden Substanzen in einem Trägergas zugeführt. Dabei werden das Trägergas und die zu identifizierenden Substanzen über die Gaszelle 2 hinweg von einer Pumpeinrichtung 32 mit einer Pumpe 33 und einem Druckregler 34 angesaugt. Durch die Aufteilung der zu identifizierenden Substanzen mit Hilfe des Gaschromatographen 30 treten diese nacheinander in die Gaszelle ein und werden anhand des von ihnen gestreuten Lichts 7 gemäß Fig. 1 nacheinander analysiert. Weil die Substanzen einzeln in die Gaszelle 2 eintreten, ist ihre Analyse auch bei einem geringen Partialdruck der jeweiligen Substanz, d. h. einer geringen Konzentration der jeweiligen zu identifizierenden Substanz und einer entsprechend geringen Intensität des von ihr gestreuten Lichts 7 möglich, zumal die Intensität des gestreuten Lichts 7 durch die hohe Intensität des in die Gaszelle eingestrahlten Lichts 9 maximiert ist. Zudem können die zu identifizierenden Substanzen von der Pumpe 33 in ein Massespektrometer 35 übergeben werden, das weitere Informationen über die zu identifizierenden Substanzen bereitstellt.

Eine Kontamination der Vorrichtung 1 durch früher identifizierte Substanzen, insbesondere wenn diese schwer flüchtig sind, wird neben dem geringen Partialdruck der Substanzen durch eine Heizeinrichtung 36 und durch Spülen des Gaschromatographen 30 und der Gaszelle 2 mit einem Spülgas aus einem weiteren Gasreservoir 37 verhindert. Die Heizeinrichtung umfasst Heizelemente 38 für die Innenoberflächen der Gaszelle 2 und weitere Heizelemente 39 für den Gaschromatographen 30 sowie einen Temperaturregler 40, der eine Temperatur in einem Bereich zwischen 60 °C und 180 °C einstellt. Auch bei diesen gemäßigten Temperaturen kann aufgrund des geringen Partialdrucks eine Kondensation selbst von schwerflüchtigen Substanzen und damit eine Verschleppung dieser Substanzen in nachfolgenden Messungen in der erfindungsgemäßen Vorrichtung 1 verhindert werden.

### BEZUGSZEICHENLISTE

- 1: Vorrichtung
- 2: Gaszelle
- 3: Gaszulauf
- 4: Gasablauf
- 5: Spektrometer
- 6: Raman-Spektrometer
- 7: gestreutes Licht
- 8: Lichtquelle
- 9: eingestrahltes Licht
- 10: Resonator
- 11: Einkoppelspiegel
- 12: Auskoppelspiegel
- 13: Lichtsensor
- 14: Regler
- 15: piezoelektrisches Element
- 16: Sammellinse
- 17: Umlenkspiegel
- 18: Polarisierungseinheit
- 19: Notch-Filter
- 20: Dispersionseinrichtung
- 21: CCD-Kamera
- 22: Lichtsensor
- 23: Auswerteeinrichtung
- 24: Laser
- 25: Laserfilter
- 26: Umlenkspiegel
- 27: Umlenkspiegel
- 28: optische Diode
- 29: Fokussieroptik
- 30: Gaschromatograph
- 31: Gasreservoir
- 32: Pumpeinrichtung
- 33: Pumpe
- 34: Druckregler
- 35: Massenspektrometer
- 36: Heizeinrichtung
- 37: weiteres Gasreservoir
- 38: Heizelement
- 39: Heizelement
- 40: Temperaturregler
- 41: Abstimmeinrichtung
- 42: Sammeloptik
- 43: Hohlspiegel

## Patentansprüche

1. Verfahren zum Identifizieren von Substanzen mit den Schritten
- Hindurchleiten der zu identifizierenden Substanzen in einer Gasphase durch eine Gaszelle (2),
- Einstrahlen von Licht (9) in die Gaszelle (2) und
- Analysieren einer spektralen Zusammensetzung von lateral zu dem eingestrahlten Licht (9) aus der Gaszelle (2) gestreutem Licht (7),
**dadurch gekennzeichnet,**
- **dass** die zu identifizierenden Substanzen durch einen Gaschromatographen (30) in die Gaszelle (2) eingeleitet werden,
- **dass** ein Partialdruck der zu identifizierenden Substanzen in der Gaszelle (2) auf weniger als 5 × 10⁴ Pa gehalten wird und
- **dass** die Gaszelle (2) in einem Resonator (10) angeordnet wird, der auf mindestens eine Wellenlänge des eingestrahlten Lichts (9) oder des gestreuten Lichts (7) abgestimmt wird.

2. Verfahren nach Anspruch 1, **dadurch gekennzeichnet, dass** das spektral analysierte gestreute Licht (7) durch Raman-Streuung lateral zu dem eingestrahlten Licht (9) aus der Gaszelle (2) gestreut wird.

3. Verfahren nach Anspruch 1, **dadurch gekennzeichnet, dass** der Partialdruck der zu identifizierenden Substanzen in der Gaszelle (2) auf weniger als 3 × 10⁴ Pa oder auf einem Wert zwischen 2 × 10⁴ Pa und 0,2 × 10⁴ Pa gehalten wird und/oder dass der absolute Druck in der Gaszelle (2) auf weniger als 5 × 10⁴ Pa oder auf weniger als 3 × 10⁴ Pa oder auf einem Wert zwischen 2 × 10⁴ Pa und 0,2 × 10⁴ Pa gehalten wird.

4. Verfahren nach einem der vorhergehenden Ansprüche, **dadurch gekennzeichnet, dass** das eingestrahlte Licht (9) in den Resonator (10) eingekoppelt wird, wobei das spektral analysierte gestreute Licht (7) lateral aus dem Resonator austritt.

5. Verfahren nach einem der vorhergehenden Ansprüche, **dadurch gekennzeichnet, dass** der Resonator (10) automatisch auf die Wellenlänge des eingestrahlten Lichts (9) abgestimmt oder bezüglich der Wellenlängen des gestreuten Lichts (7) durchgestimmt wird.

6. Verfahren nach einem der vorhergehenden Ansprüche, **dadurch gekennzeichnet, dass** eine Temperatur von Innenoberflächen der Gaszelle (2) auf einem Wert zwischen 60 °C und 180 °C oder zwischen 80 °C und 140 °C gehalten wird.

7. Verfahren nach einem der vorhergehenden Ansprüche, **dadurch gekennzeichnet, dass** die zu identifizierenden Substanzen in einem Trägergas durch die Gaszelle (2) hindurch geleitet werden.

8. Verfahren nach einem der vorhergehenden Ansprüche, **dadurch gekennzeichnet, dass** die zu identifizierenden Substanzen aus der Gaszelle (2) in ein Massenspektrometer (35) überführt werden.

9. Vorrichtung (1) zum Identifizieren von Substanzen mit
- einer Gaszelle (2), die zur Aufnahme der zu identifizierenden Substanzen in einer Gasphase ausgebildet ist,
- einer Lichtquelle (8), die zum Einstrahlen von Licht (9) in die Gaszelle (2) ausgebildet und angeordnet ist,
- einem Spektrometer (5), das zum Analysieren einer spektralen Zusammensetzung von lateral zu dem eingestrahlten Licht aus der Gaszelle (2) gestreutem Licht (7) ausgebildet und angeordnet ist, und
- einer Pumpeinrichtung (32), die zum Einstellen eines Drucks in der Gaszelle (2) ausgebildet ist,
**dadurch gekennzeichnet,**
- **dass** ein Gaschromatograph (30) der Vorrichtung (1) derart gasstromauf an die Gaszelle (2) angeschlossen ist, dass die zu identifizierenden Substanzen durch den Gaschromatographen (30) in die Gaszelle (2) eingeleitet werden,
- **dass** die Pumpeinrichtung (32) zum Halten eines Partialdruck der zu identifizierenden Substanzen in der Gaszelle (2) von weniger als 5 × 10⁴ Pa ausgebildet und angeschlossen ist und
- **dass** ein Resonator (10) die Gaszelle (2) umschließt, wobei der Resonator (10) auf mindestens eine Wellenlänge des eingestrahlten Lichts (9) oder des gestreuten Lichts (7) abstimmbar ist.

10. Vorrichtung (1) nach Anspruch 9, **dadurch gekennzeichnet, dass** das Spektrometer (5) ein Raman-Spektrometer ist (6).

11. Vorrichtung (1) nach Anspruch 9 oder 10, **dadurch gekennzeichnet, dass** die Lichtquelle (8) dazu angeordnet ist, das eingestrahlte Licht (9) in den Resonator (10) einzukoppeln, und dass das Spektrometer (5) dazu angeordnet ist, die spektrale Zusammensetzung des lateral aus dem Resonator (10) austretenden gestreutem Lichts (7) zu analysieren.

12. Vorrichtung (1) nach einem der Ansprüche 9 bis 11, **dadurch gekennzeichnet, dass** eine Abstimmeinrichtung (41) der Vorrichtung (1) zum automatischen Abstimmen des Resonators (10) auf die Wellenlänge des eingestrahlten Lichts (9) oder zum Durchstimmen des Resonators (10) bezüglich der Wellenlängen des gestreuten Lichts (7) ausgebildet ist.

13. Vorrichtung (1) nach einem der Ansprüche 9 bis 12, **dadurch gekennzeichnet, dass** Heizeinrichtungen (36) der Vorrichtung (1) zum Halten einer Temperatur von Innenoberflächen der Gaszelle (2) auf einem Wert zwischen 60 °C und 180 °C ausgebildet sind.

14. Vorrichtung (1) nach einem der Ansprüche 9 bis 13, **dadurch gekennzeichnet, dass** der Gaschromatograph (30) mindestens ein Kapillarrohr aufweist.

15. Vorrichtung (1) nach einem der Ansprüche 9 bis 14, **dadurch gekennzeichnet, dass** ein Massenspektrometer (35) der Vorrichtung (1) gasstromab an die Gaszelle (2) angeschlossen ist.

## Claims

1. Method of identifying substances comprising the steps
- guiding the substances to be identified in a gas phase through a gas cell (2),
- radiating light (9) into the gas cell (2), and
- analyzing a spectral composition of light (7) scattered out of the gas cell (2) laterally with respect to the radiated light (9),
**characterized in**
- **that** the substances to be identified are guided into the gas cell (2) through a gas chromatograph (30),
- **that** a partial pressure of the substances to be identified in the gas cell (2) is held below 5 × 10⁴Pa, and
- **that** the gas cell (2) is arranged in a resonator (10) which is tuned to at least one wavelength of the radiated light (9) or the scattered light (7).

2. Method of claim 1, **characterized in that** the spectrally analyzed scattered light (7) is scattered out of the gas cell (2) laterally with respect to the radiated light by means of Ramanscattering.

3. Method of claim 1, **characterized in that** the partial pressure of the substance to be identified in the gas cell (2) is held below 3 × 10⁴ Pa or at a value between 2 × 10⁴ Pa and 0.2 × 10⁴ Pa, and/or the absolute pressure in the gas cell (2) is held below 5 × 10⁴ Pa or below 3 × 10⁴ Pa or at a value between 2 × 10⁴ Pa and 0.2 × 10⁴ Pa.

4. Method of any of the preceding claims, **characterized in that** the radiated light (9) is coupled into the resonator (10), wherein the spectrally analyzed scattered light (7) is laterally emitted out of the resonator.

5. Method of any of the preceding claims, **characterized in that** the resonator (10) is automatically tuned to the wavelength of the radiated light (9) or tuned-through with respect to the wavelengths of the scattered light (7).

6. Method of any of the preceding claims, **characterized in that** a temperature of inner surfaces of the gas cell (2) is held at a value between 60 °C and 180 °C or between 80 °C and 140°C.

7. Method of any of the preceding claims, **characterized in that** the substances to be identified are guided through the gas cell (2) within a carrier gas.

8. Method of any of the preceding claims, **characterized in that** the substances to be identified are transferred out of the gas cell (2) into a mass spectrometer (35).

9. Apparatus (1) for identifying substances comprising
- a gas cell (2) which is configured for receiving the substances to be identified in a gas phase,
- a light source (8) which is configured and arranged for radiating light (9) into the gas cell (2),
- a spectrometer (5) configured and arranged for analyzing a spectral composition of light (7) scattered out of the gas cell (2) laterally with respect to the radiated light, and
- a pump device (32) for adjusting a pressure in the gas cell (2),
**characterized in**
- **that** a gas chromatograph (30) of the apparatus (1) is gas-upstream connected to the gas cell (2) in such a way that the substances to be identified are guided into the gas cell (2) through the gas chromatograph (30),
- **that** the pump device (32) is configured and connecting for holding a partial pressure of the substances to be identified in the gas cell (2) of less than 5 × 10⁴ Pa, and
- **that** a resonator (10) encloses the gas cell (2), wherein the resonator (10) is tunable to at least one wavelength of the radiated light (9) or the scattered light (7).

10. Apparatus (1) of claim 9, **characterized in that** the spectrometer (5) is a Ramanspectrometer.

11. Apparatus (1) of claim 9 or 10, **characterized in that** the light source (8) is arranged to couple the radiated light (9) into the resonator (10), and that the spectrometer (5) is arranged to analyze the spectral composition of the scattered light (7) laterally emitted out of the resonator (10).

12. Apparatus (1) of any of the claims 9 to 11, **characterized in that** a tuning device (41) of the apparatus (1) is configured for automatically tuning the resonator (10) to the wavelength of the radiated light (9) or for tuning-through (7) the resonator (10) with respect to the wavelengths of the scattered light (7).

13. Apparatus (1) of any of the claims 9 to 12, **characterized in that** heating devices (36) of the apparatus (1) are configured for holding a temperature of inner surfaces of the gas cell (2) at a value between 60 °C and 180 °C.

14. Apparatus (1) of any of the claims 9 to 13, **characterized in that** the gas chromatograph (30) comprises at least one capillary tube.

15. Apparatus (1) of any of the claims 9 to 14, **characterized in that** a mass spectrometer (35) of the apparatus (1) is gas-downstream connected to the gas cell (2).

## Revendications

1. Procédé pour l'identification de substances avec les étapes suivantes :
- passage des substances à identifier en phase gazeuse à travers une cellule à gaz (2),
- irradiation de lumière (9) dans la cellule à gaz (2) et
- analyse de la composition spectrale de la lumière (7) diffusée hors de la cellule à gaz (2) latéralement par rapport à la lumière irradiée (9),
**caractérisé en ce que**
- les substances à identifier sont introduites à travers un chromatographe en phase gazeuse (30) vers la cellule à gaz (2),
- une pression partielle des substances à identifier est maintenue dans la cellule à gaz (2) à moins de 5×10⁴ Pa et
- la cellule à gaz (2) est disposée dans un résonateur (10) qui est harmonisé à au moins une longueur d'onde de la lumière irradiée (9) ou de la lumière diffusée (7).

2. Procédé selon la revendication 1, **caractérisé en ce que** la lumière diffusée (7) analysée spectralement est diffusée par diffusion de Raman hors de la cellule à gaz (2) latéralement par rapport à la lumière irradiée (9).

3. Procédé selon la revendication 1, **caractérisé en ce que** la pression partielle des substances à identifier est maintenue dans la cellule à gaz (2) à moins de 3×10⁴ Pa ou à une valeur entre 2×10⁴ Pa et 0,2×10⁴ Pa et/ou **en ce que** la pression absolue dans la cellule à gaz (2) est maintenue à moins de 5×10⁴ Pa ou à moins de 3×10⁴ Pa ou à une valeur entre 2×10⁴ Pa et 0,2×10⁴ Pa.

4. Procédé selon l'une des revendications précédentes, **caractérisé en ce que** la lumière irradiée (9) est introduite dans le résonateur (10), dans lequel la lumière diffusée (7) analysée spectralement sort latéralement du résonateur.

5. Procédé selon l'une des revendications précédentes, **caractérisé en ce que** le résonateur (10) est harmonisé automatiquement à la longueur d'onde de la lumière irradiée (9) ou est accordé par rapport aux longueurs d'onde de la lumière diffusée (7).

6. Procédé selon l'une des revendications précédentes, **caractérisé en ce qu'**une température des surfaces internes de la cellule à gaz (2) est maintenue à une valeur entre 60°C et 180°C ou entre 80°C et 140°C.

7. Procédé selon l'une des revendications précédentes, **caractérisé en ce que** les substances à identifier sont guidées dans un gaz porteur à travers la cellule à gaz (2).

8. Procédé selon l'une des revendications précédentes, **caractérisé en ce que** les substances à identifier sont transférées de la cellule à gaz (2) vers un spectromètre de masse (35).

9. Dispositif (1) pour l'identification de substances avec
- une cellule à gaz (2) conçu pour le logement des substances à identifier en phase gazeuse,
- une source de lumière (8) conçu et disposée pour l'irradiation de lumière (9) danbs la cellule à gaz (2),
- un spectromètre (5) conçu et disposé pour l'analyse d'une composition spectrale de la lumière (7) diffusée hors de la cellule à gaz (2) latéralement par rapport à la lumière irradiée et
- un dispositif de pompage (32) conçu pour le réglage d'une pression dans la cellule à gaz (2),
**caractérisé en ce que**
- un chromatographe en phase gazeuse (30) est raccordé à la cellule à gaz (2) en amont du flux de gaz par rapport au dispositif (1), de façon à ce que les substances à identifier soient introduites dans la cellule à gaz (2) à travers le chromatographe en phase gazeuse (30),
- le dispositif de pompage (32) est conçu et raccordé pour le maintien d'une pression partielle des substances à identifier dans la cellule à gaz (2) inférieure à 5×10⁴ Pa et
- un résonateur (10) entoure la cellule à gaz (2), dans lequel le résonateur (10) peut être harmonisé à au moins une longueur d'onde de la lumière irradiée (9) ou de la lumière diffusée (7).

10. Dispositif (1) selon la revendication 9, **caractérisé en ce que** le spectromètre (5) est spectromètre de Raman (6).

11. Dispositif (1) selon la revendication 9 ou 10, **caractérisé en ce que** la source de lumière (8) est disposée pour introduire la lumière irradiée (9) dans le résonateur (10) et **en ce que** le spectromètre (5) est disposé pour analyser la composition spectacle de la lumière diffusée (7) sortant latéralement du résonateur (10).

12. Dispositif (1) selon l'une des revendications 9 à 11, **caractérisé en ce qu'**un dispositif d'harmonisation (41) du dispositif (1) est conçu pour l'harmonisation automatique du résonateur (10) à la longueur d'onde de la lumière irradiée (9) pour le réglage du résonateur (10) par rapport aux longueurs d'onde de la lumière diffusée (7).

13. Dispositif (1) selon l'une des revendications 9 à 12, **caractérisé en ce que** des dispositifs de chauffage (36) du dispositif (1) sont conçus pour le maintien d'une température des surfaces internes de la cellule à gaz (2) à une valeur entre 60°C et 180°C.

14. Dispositif (1) selon l'une des revendications 9 à 13, **caractérisé en ce que** le chromatographe en phase gazeuse (30) comprend au moins un tube capillaire.

15. Dispositif (1) selon l'une des revendications 9 à 14, **caractérisé en ce qu** spectromètre de masse (35) du dispositif (1) est raccordé à la cellule à gaz (2) en aval du flux de gaz.
